Europäisches Patentamt

European Patent Office

Office européen des brevets

(19)

(11) Veröffentlichungsnummer: **0 024 718**
A2

(12) # EUROPÄISCHE PATENTANMELDUNG

(21) Anmeldenummer: 80105046.9

(22) Anmeldetag: 26.08.80

(51) Int. Cl.³: **F 02 M 25/00**
B 01 D 53/22, B 01 D 13/04
//F23L7/00

(30) Priorität: 04.09.79 DE 2935608
04.09.79 DE 2935621
04.09.79 DE 2935622
24.09.79 DE 2938556
24.09.79 DE 2938603

(43) Veröffentlichungstag der Anmeldung:
11.03.81 Patentblatt 81/10

(84) Benannte Vertragsstaaten:
AT BE CH FR GB IT LI NL SE

(71) Anmelder: Wolff, Friedrich
Lindenring 17
D-6000 Frankfurt 50(DE)

(72) Erfinder: Wolff, Friedrich
Lindenring 17
D-6000 Frankfurt 50(DE)

(74) Vertreter: Knoblauch, Ulrich, Dr.-Ing.
Kühhornshofweg 10
D-6000 Frankfurt/Main(DE)

(54) Vorrichtung zur Erhöhung oder Verminderung des Sauerstoffanteils der Luft sowie Verfahren zu deren Herstellung und Verfahren zu deren Betrieb.

(57) Eine Vorrichtung zur Erhöhung oder Verminderung des Sauerstoffanteils der einem Verbraucher, insbesondere einem Brennraum, zuzuführenden Luft weist eine große Zahl parallel zueinander in einem Gehüse angeordnete Hohlfasern mit mikroporöser Wand auf, die eine sehr dünne semipermeable Membran an der inneren oder äußeren Umfangsfläche aufweisen. Einander gegenüberliegende Stirnwände eines Gehäuses sind von Enden der Hohlfasern durchsetzt, wobei diese Enden an ihrem Außenumfang abgedichtet sind. Ein Ausgangssammelraum oder zwei einander gegenüberliegende Ausgangssammelräume (16, 17) sollten sich längs einer parallel zu den Hohlfasern verlaufenden Gehäuseseitenwand (21, 22) erstrecken.

Auf diese Weise lassen sich sehr große Membranflächen auf verhältnismäßig kleinem Raum unterbringen und dementsprechend große Luftmengen behandeln, wie sie für den Betrieb einer Brennkraftmaschine oder einer Feuerung benötigt werden. Hierbei lassen sich Verbrennungstemperaturen von 2000°C und mehr erreichen. Zur Verminderung des Stickoxidanteils im Abgas sollte die Abkühlung des Abgases in einem ersten Temperaturbereich langsamer erfolgen als in einem nachfolgenden Temperaturbereich.

Fig.2

- 1 -

<u>Vorrichtung zur Erhöhung oder Verminderung des Sauerstoff-
anteils der Luft sowie Verfahren zu deren Herstellung und
Verfahren zu deren Betrieb</u>

Die Erfindung bezieht sich auf eine Vorrichtung zur Erhöhung oder Verminderung des Sauerstoffanteils der einem Verbraucher, insbesondere einem Brennraum, zuzuführenden Luft unter Verwendung einer sehr dünnen semipermeablen Membran, die einen ersten Raum höheren Drucks mit einem Eingang für normale Luft und einem Ausgang für $O_2$-verarmte Luft und einen zweiten Raum geringeren Druckes mit einem Ausgang für $O_2$-angereicherte Luft trennt, sowie auf ein Verfahren zur Herstellung dieser Vorrichtung und auf ein Verfahren zu deren Betrieb.

Bei einer bekannten Vorrichtung dieser Art, die insbesondere zur Anreicherung von Atemluft oder Verbrennungsluft mit Sauerstoff dient, wird eine für Sauerstoff stärker als für Stickstoff durchlässige Membran aus Silikonkautschuk verwendet, die flächig auf einen porösen Träger aufgebracht ist. Die hierbei erzielbaren Membranflächen sind klein mit der Folge, daß sich auch nur geringe Mengen $O_2$-angereicherter Luft gewinnen lassen. Zwar läßt sich die Menge durch Erhöhung des Differenzdruckes steigern; eine solche Druckerhöhung ist aber für viele Anwendungszwecke unerwünscht und aus technischen Gründen ohnehin nur in begrenztem Maß möglich.

Es ist ferner ein Dialyse-Gerät zur Blutreinigung bekannt, bei dem poröse Hohlfasern in einer Anzahl von weniger als 10 000 zu einem zylindrischen Bündel zusammengefaßt und in einem zylindrischen Gehäuse angeordnet sind. Die Faserenden sind abgedichtet durch die Stirnwände des Gehäuses geführt. Blut wird durch die hohlen Innenräume der Hohlfasern geleitet. Der Gehäuseumfang besitzt an einem Ende einen Eingang und am anderen Ende einen Ausgang für Reinigungsflüssigkeit, die durch den Gehäuseraum außerhalb der Hohlfasern gepumpt wird. Hierbei wandern die Giftstoffe nicht infolge eines Druckunterschiedes sondern infolge eines Konzentrationsunterschiedes von dem Blut in die Reinigungsflüssigkeit. Damit eine ausreichende Zeit für den Übertritt der Giftstoffe in die Reinigungsflüssigkeit verbleibt, haben die Hohlfasern eine Länge von 220 bis 350 mm.

Der Erfindung liegt die Aufgabe zugrunde, eine Vorrichtung der eingangs beschriebenen Art anzugeben, die bei räumlich kleinen Abmessungen Luft in größeren Mengen und/oder mit geringen Druckunterschieden zu behandeln gestattet, so daß sie insbesondere für die Versorgung von Brennräumen geeignet ist.

Diese Aufgabe wird erfindungsgemäß dadurch gelöst, daß Hohlfasern mit mikroporöser Wand die Membran auf einer Umfangsfläche aufweisen und in großer Zahl parallel zueinander in einem Gehäuse angeordnet sind, dessen einander gegenüberliegende Stirnwände von den Enden der Hohlfasern durchsetzt sind, wobei diese Enden an ihrem Außenumfang abgedichtet sind.

Da die inneren oder äußeren Umfangsflächen aller Hohlfasern mit einer Membran versehen sind, ergibt sich eine außerordentlich große Membranfläche. Es ist daher möglich, eine kleine Menge $O_2$-angereicherter Luft, z.B. für Atmungszwecke, mit sehr geringen Druckunterschieden, z.B. der Lungenkraft, zu erzeugen oder mit üblichen Druckunterschieden von etwa 2 Pa sehr große Mengen $O_2$-angereicherter Luft, z.B. die Verbrennungsluft eines Kraftfahrzeugs oder einer Feuerung, zu gewinnen. Die mikroporöse Wand gibt eine ausreichend stabile Unterlage für eine ultradünne Membran.

Hierbei können die Hohlfasern einen Träger bilden, auf den die Membran aufgebracht ist. Dies erlaubt es, eine Hohlfaser mit optimalen Trageigenschaften zu verwenden. Die Hohlfasern können aber auch aus dem Membranmaterial bestehen, so daß sich ein einstückiges Gebilde mit einem porösen Tragteil und einer nichtporösen Membran ergibt. Hierbei braucht die Membran nicht nachträglich aufgebracht zu werden; sie kann schon bei der Herstellung der Hohlfasern erzeugt werden, sei es durch gesteuerte Porenbildung, sei es durch Schließen der Poren längs einer Umfangswand. Außerdem ergibt sich eine besonders gute Verbindung zwischen Träger und Membran. Gegebenenfalls können die Hohlfasern in ihrer Wand auch Verstärkungseinlagen aufweisen.

Zweckmäßigerweise bilden die inneren Hohlräume der Hohlfasern den ersten Raum und der Gehäuseraum außerhalb der Hohlfasern den zweiten Raum. Da der innere Hohlraum der Hohlfasern den höheren Druck führt, ist zwar eine geringfügige elastische Aufweitung der Hohlfasern möglich, nicht aber ein Zusammendrücken und eine damit verbundene Verminderung des Durchtrittsquerschnitts.

Es sollten mindestens 100 000 Hohlfasern, vorzugsweise mehr als 0,5 Millionen Hohlfasern, vorgesehen sein. Vorrichtungen mit mehr als 5 Millionen Hohlfasern sind ohne Schwierigkeiten möglich. Insbesondere sollten soviel Hohlfasern annähernd parallel zueinander in einer Hohlfaserbatterie angeordnet sein, daß sich eine Membranfläche von 15 bis 500 $m^2$ ergibt.

Mit besonderem Vorzug sind die Hohlfasern in einem Gehäuse angeordnet und es erstreckt sich mindestens ein Ausgangssammelraum längs einer parallel zu den Hohlfasern verlaufenden Gehäuseseitenwand. Die $O_2$-angereicherte Luft kann daher im wesentlichen quer zu den Hohlfasern zum Ausgangssammelraum hin abgesaugt werden, so daß die Drosselwiderstände vergleichsweise klein sind.

Insbesondere kann dafür gesorgt sein, daß das Gehäuse rechteckige Stirnwände mit einer langen und einer demgegenüber kurzen Seite besitzt und daß sich der Ausgangssammelraum längs einer zwischen den langen Seiten der Stirnwände verlaufenden Gehäuseseitenwand und im wesentlichen über deren gesamte Fläche erstreckt. Ferner kann sich ein zweiter gleichartiger Ausgangssammelraum längs der gegenüberliegenden Seitenwand erstrecken. Auf diese Weise ist sichergestellt, daß alle Hohlfasern über einen verhältnismäßig kurzen Weg mit einem Ausgangssammelraum verbunden sind. Dementsprechend ist auch der Druckabfall zwischen Membran und Ausgangssammelraum entsprechend klein. Da die Hohlfasern nicht absolut gerade sind, verbleiben auch bei dichtgepackten Hohlfasern zwischen ihnen ausreichend große Gassen für das Gas. Gegebenenfalls können solche Gassen aber auch konstruktiv durch eine entsprechende Anordnung der Hohlfasern oder durch Verwendung von Hohlfaserabschnitten größeren Durchmessers vorgegeben werden.

Vorzugsweise haben die Hohlfasern einen Außendurchmesser von 100 bis 400 μm, vorzugsweise um 200 μm. Unter Berücksichtigung der erzielbaren Wandstärken ergibt sich ein ausreichend großer Innenquerschnitt, welcher der hindurchströmenden Luft keinen zu großen Strömungswiderstand entgegensetzt.

Die Hohlfasern brauchen keine größere Wandstärke als 20 µm zu haben, es genügen sogar weniger als 6 µm. Dies ergibt eine ausreichende Stabilität bei geringstmöglichem Widerstand gegenüber der hindurchtretenden Luft.

Es empfiehlt sich, die Hohlfaserlänge möglichst kurz zu halten, insbesondere eine Länge von weniger als 200 mm, vorzugsweise 100 mm, zu verwenden, damit auch dem Membranabschnitt am hinteren Ende der Hohlfasern der Membran Luft mit einem ausreichenden Sauerstoffanteil angeboten wird.

Bei den Poren der Hohlfasern ist zu berücksichtigen, daß diese einerseits klein genug sein müssen, um die sichere Abstützung der Membran nicht zu beeinträchtigen, andererseits aber groß genug, um den Gastransport von bzw. zu der Membran nicht zu behindern. Günstig ist es hierbei, wenn die Porengröße weitgehend im Bereich 0,1 µm bis 1 µm liegt. Vorzugsweise nimmt die Porengröße zur Membran hin ab; die kleinen Poren zur besseren Abstützung der Membran brauchen sich hierbei nur über eine so dünne Schicht zu erstrecken, daß sie den Gastransport nicht merklich beeinträchtigen. Insbesondere kann die Größe der von der Membran abgedeckten Poren 20 bis 50 nm betragen.

Bei einer bevorzugten Ausführungsform ist dafür gesorgt, daß die Membran am Innenumfang der Hohlfasern angeordnet ist. Dies ergibt eine besonders hohe Lebensdauer, weil die Membran gut geschützt angeordnet ist und jede mechanische Beanspruchung vermieden wird, wie sie bei aufeinanderliegenden Hohlfasern mit außen angeordneter Membran auftreten kann.

Günstig ist es ferner, dem Eingang des ersten Raumes ein Luftfilter vorzuschalten. Damit ist sichergestellt, daß die inneren Hohlräume der Hohlfasern nicht verstopfen.

Beim Einbau in ein Kraftfahrzeug sollten die Hohlfasern sich in dessen Längsrichtung erstrecken und die einen Enden nahe der Frontseite des Fahrzeugs angeordnet sein. Auf diese Weise kann der Fahrtwind ausgenutzt werden, um die Luft durch die Hohlfasern zu treiben, wenn es erstrebt ist, eine mit Sauerstoff angereicherte Verbrennungsluft im Motor zu verwenden.

Zum Antrieb der Luft durch den inneren Hohlraum der Hohlfasern kann noch ein Gebläse dienen. Dieses kann in einem Kraftfahrzeug auch zusätzlich eingebaut sein.

Wenn der Brennraum Teil einer Brennkraftmaschine oder Feuerungsanlage ist, sollte die Membranfläche so groß gewählt sein, daß die Verbrennungstemperatur über 2500°C, insbesondere bei etwa 3000°C, liegt. Die hohen Verbrennungstemperaturen führen zu einer Steigerung des Wirkungsgrades und einer Verminderung des Brennstoffverbrauchs. Bei Brennkraftmaschinen ist es darüberhinaus überflüssig, daß das Luft-Kraftstoff-Verhältnis in Abhängigkeit von Vollast und Teillast verändert wird, wodurch Vergaserbau und Wartung wesentlich vereinfacht werden. Da die Zündgeschwindigkeit sehr groß ist, kann der Zündzeitpunkt nahe an den oberen Totpunkt gelegt werden. Dies spart zusätzlich Treibstoff und verringert die Neigung zur Selbstzündung. Die verminderte Klopfneigung erlaubt es ferner, die Verdichtung zu erhöhen, wodurch der Wirkungsgrad weiter gesteigert wird. Der rasche Zündverlauf vermeidet ferner ungleichmäßige Wärmeübergänge auf die Brennkammerwand, was zu einer geringeren Kühlwassertemperatur und zu einer geringeren Ventilatorleistung führt. Außerdem ergibt der rasche Zündverlauf einen geschmeidigen Lauf bei einer Brennkraftmaschine. Die für den Betrieb eines solchen Brennraums benötigte Verbrennungsluftmenge ist allerdings sehr groß. Beispielsweise beträgt sie für einen 2 Liter-Motor über 100 m³/h. Eine entsprechend große Membranfläche läßt sich aber mit Hilfe der Hohlfasern ohne Schwierigkeiten erzeugen.

Günstig ist es ferner, wenn dem Abgaskanal des Brennraums eine Vorrichtung zur Verminderung des Stickoxid-Anteils zugeordnet ist. Hiermit wird die Tatsache berücksichtigt, daß bei den angestrebten hohen Verbrennungstemperaturen eine große Stickoxidmenge entsteht, bei 2700°C beispielsweise 5 Vol.%. Insgesamt ergibt sich daher eine Einrichtung, die einer normalen Verbrennungsanlage entspricht (Zufuhr von Brennstoff und normaler Luft; Abfuhr eines Abgases mit geringem Schadstoffanteil), aber einen wesentlich verbesserten Wirkungsgrad mit entsprechender Brennstoffeinsparung hat.

Beispielsweise kann der Abgaskanal in seinem ersten Teil eine Wärmeisolation aufweisen, die eine den Stickoxidzerfall begünstigende Verzögerung der Abgasabkühlung bewirkt. Eine andere Möglichkeit besteht darin, dem Abgaskanal mindestens eine Vorrichtung zur reaktionsfreien Abgaserwärmung zuzuordnen.

Ein Verfahren zur Herstellung einer Vorrichtung, bei der Hohlfasern mit einer Membran versehen werden, ist erfindungsgemäß dadurch gekennzeichnet, daß die Hohlfasern zunächst hergestellt und dann mit einer Beschichtungsflüssigkeit, die Membranwerkstoff enthält, behandelt werden, worauf der Membranwerkstoff auf den Hohlfasern vernetzt wird. Die Beschichtungsflüssigkeit läßt sich leicht auf die Umfangsflächen der Hohlfasern auftragen. Auch die Dosierung zur Erzielung der gewünschten Membrandicke ist möglich.

Um besonders dünne Membranen zu erzielen, empfiehlt es sich, wenn die Beschichtungsflüssigkeit ein Lösungs- oder Dispersionsmittel für den Membranwerkstoff enthält, das anschließend entfernt wird. Insbesondere sollte ein Lösungs- oder Dispersionsmittel verwendet werden, das wenigstens teilweise durch die Poren der Hohlfasern entweichen kann. Die Moleküle müssen daher kleiner sein als die Poren der Hohlfaser. Dies macht eine Innenbeschichtung möglich. Bei einer Außenbeschichtung wird die Geschwindigkeit, mit der das Lösungs- bzw. Dispersionsmittel entfernt werden kann, erhöht.

Die Entfernung des Lösungs- oder Dispersionsmittels kann beispielsweise dadurch erfolgen, daß zwischen Innen- und Außenseite der Hohlfasern eine Druckdifferenz angelegt wird. Stattdessen oder gleichzeitig kann das Lösungs- oder Dispersionsmittel durch Verdunsten bzw. Verdampfen entfernt werden. Häufig ist es günstig, wenn die Vernetzung des Membranwerkstoffes schon vor der Beschichtungsbehandlung eingeleitet wird. Da hierbei schon größere Moleküle entstehen, ist es einfacher, Lösungsmittel durch die Hohlfaserwand zu entfernen, ohne daß gleichzeitig Membranwerkstoff mitgenommen wird. Die Beschichtungsflüssigkeit kann auch einen Katalysator enthalten. In ihr kann auch eine Vernetzerkomponente enthalten sein. Eine andere Möglichkeit besteht darin, die zu beschichtende Hohlfaserfläche zuvor mit einer Vernetzerkomponente zu versehen oder auch die Hohlfasern aus einem Material bestehen zu lassen, das aktive, die Vernetzung bewirkende Gruppen aufweist. Wenn der mit einem Katalysator versehene Membranwerkstoff gut fließfähig ist, besteht auch die Möglichkeit, ihn direkt als Beschichtungsflüssigkeit zu verwenden.

Das Auftragen kann beispielsweise derart erfolgen, daß die Hohlfasern längs einer Auftragsstelle für die Beschichtung

flüssigkeit vorbeibewegt werden. Sie können auch in die Beschichtungsflüssigkeit getaucht werden oder vorzugsweise mit der Beschichtungsflüssigkeit besprüht werden.

Eine besonders günstige Möglichkeit besteht darin, daß bei der Herstellung der Hohlfasern zur Erzeugung des inneren Hohlraums ein Füllmittel in das Fasermaterial eingeführt wird, das Membranwerkstoff enthält.

Ein Verfahren zum Betrieb der Vorrichtung ist erfindungsgemäß dadurch gekennzeichnet, daß durch Anreicherung der Verbrennungsluft mit Sauerstoff im Brennraum eine Verbrennungstemperatur von mehr als 2500$^{o}$C erzielt wird und daß die Abkühlung der den Brennraum verlassenden Abgase über einen Temperaturbereich von mindestens 200$^{o}$C langsamer erfolgt als über einen nachfolgenden Temperaturbereich. Bei den für einen hohen Wirkungsgrad erstrebten Verbrennungstemperaturen sollten die Abgase über einen erheblichen Temperaturbereich langsam abgekühlt werden. Je geringer die Abkühlgeschwindigkeit, um so größer die verbleibende Stickoxidmenge. Vorzugsweise verbleiben die Abgase im Temperaturbereich langsamer Abkühlung mindestens 0,3 s.

Insbesondere sollte die Abkühlgeschwindigkeit im Temperaturbereich langsamer Abkühlung der temperaturabhängigen Zerfallsgeschwindigkeit des Stickoxids angenähert sein, also in diesem Temperaturbereich abnehmen.

Günstig ist es ferner, wenn die Anfangstemperatur des Bereichs langsamer Abkühlung auf mindestens 1400$^{o}$C gehalten wird. Der Temperaturbereich langsame Abkühlung befindet sich daher auf einem verhältnismäßig hohen Temperaturniveau, bei dem hohe Zerfallsgeschwindigkeiten ausgenutzt werden können.

Die Erfindung wird nachstehend anhand in der Zeichnung dargestellter Ausführungsbeispiele näher erläutert.
Es zeigen:

Fig. 1 einen Querschnitt durch mehrere mit einer Membran belegte Hohlfasern,

Fig. 2 eine räumliche Darstellung einer Vorrichtung gemäß der Erfindung mit einer Schnittfläche gemäß der Ebene II-II in Fig. 3,

Fig. 3 einen Horizontalschnitt durch die Vorrichtung der Fig. 2,

Fig. 4 Endabschnitte einer abgewandelten Hohlfaserform in einer Stirnwand des Gehäuses,

Fig. 5 einen Schnitt längs der Linie V-V in Fig. 4,

Fig. 6 schematisch eine Vorrichtung zur Herstellung von Hohlfasern,

Fig. 7 einen schematischen Querschnitt durch eine Ausführungsform einer Hohlfaser mit Innenmembran,

Fig. 8 eine abgewandelte Ausführungsform der Fig. 7,

Fig. 9 schematisch einen Verfahrensablauf zur Erzeugung einer Innenmembran,

Fig.10 einen Querschnitt und

Fig.11 einen Längsschnitt durch eine Vorrichtung zur Erzeugung einer Außenmembran,

Fig. 12 den Gleichgewichtszustand Luft : Stickoxid in
einem den Stickoxid-Anteil über der Abgastemperatur
T darstellenden Diagramm,

Fig. 13 in einem Diagramm die Zerfalls-Halbwertszeit $t_H$
des Stickoxids über der Abgastemperatur T,

Fig. 14 in einem Zeitdiagramm schematisch den Temperaturverlauf des Abgases während der Abkühlung,

Fig. 15 schematisch eine Brennkraftmaschine mit einer Vorrichtung zur Verminderung des Stickoxid-Anteils
im Abgas,

Fig. 16 einen Querschnitt durch die Vorrichtung längs der
Linie V-V in Fig. 15,

Fig. 17 einen schematischen Querschnitt durch eine andere
Ausführungsform einer Vorrichtung zur Verminderung
des Stickoxid-Anteils,

Fig. 18 eine weitere Ausführungsform einer solchen Vorrichtung,

Fig. 19 eine vierte Ausführungsform einer solchen Vorrichtung, und

Fig. 20 schematisch den Einbau der erfindungsgemäßen
Vorrichtung in ein Kraftfahrzeug.

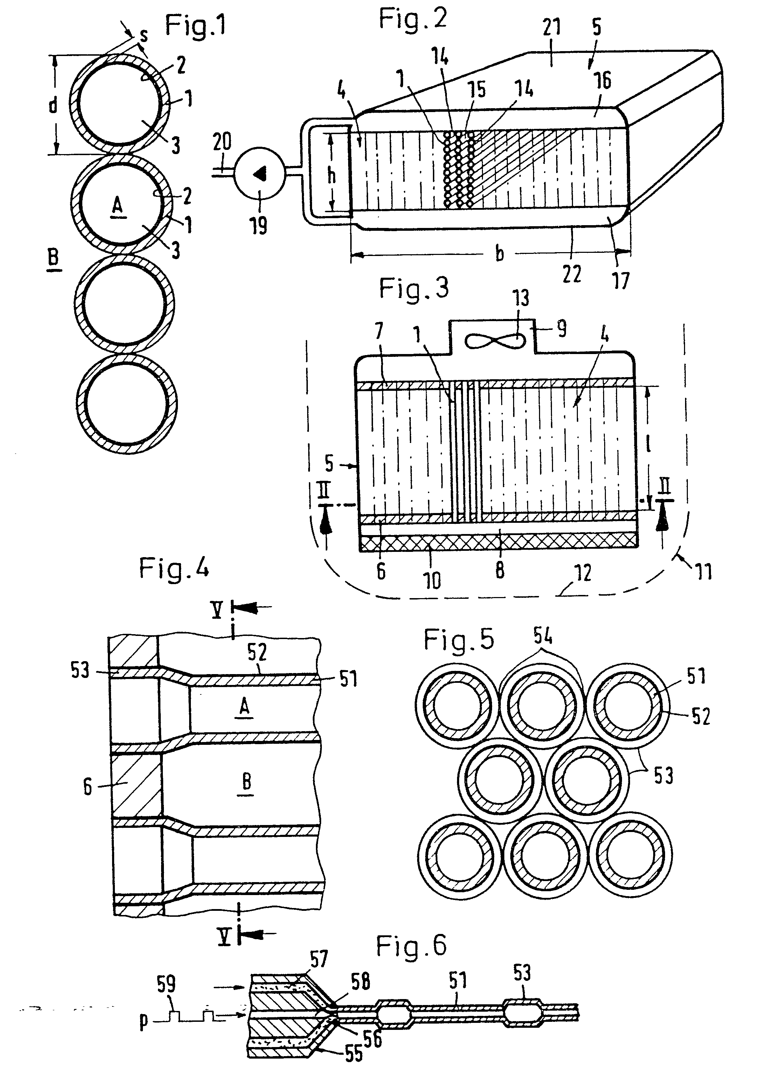

In Fig. 1 sind in einer Reihe übereinander mehrere Hohlfasern 1 veranschaulicht, die innen mit einer ultradünnen,
semipermeablen Membran 2 belegt ist. Die Hohlfaser hat
beispielsweise einen Außendurchmesser d von 50 bis 400 $\mu$m,
insbesondere 100 bis 200 $\mu$m, und eine Wandstärke s von

weniger als 6 µm bis 20 µm, insbesondere 5 bis 10 µm.
Die Membran hat beispielsweise eine Dicke von 100 nm.
Die Hohlräume 3 der Hohlfasern bilden einen ersten Raum
A, der Raum außerhalb der Hohlfasern bildet einen zweiten
Raum B. Hält man diese beiden Räume auf unterschiedlichen
Drücken, so wandert Gas aus dem Raum höheren Drucks in den
Raum geringeren Drucks, wobei die Membran 2 für Sauerstoff
durchlässiger ist als für Stickstoff.

Fig. 2 und 3 zeigen eine Vorrichtung, in der eine außerordentlich große Zahl der beschriebenen Hohlfasern verwendet wird. Eine Batterie 4 mit der Länge l von 10 cm, der Höhe h von 20 cm und der Breite b von 60 cm kann sechs Millionen und mehr sich in Längsrichtung parallel zueinander erstreckender Hohlfasern 1 enthalten, die eine Membranfläche von ca. 180 m$^2$ und mehr ergeben.

Die Faserbatterie 4 ist in einem Gehäuse 5 untergebracht, das zwei Stirnwände 6 und 7 aufweist, in welche die Enden der Hohlfasern 1 unter Abdichtung am äußeren Umfang eingesetzt sind. Mit Vorteil bestehen die Stirnwände 6 und 7 aus die Umfänge der Fasern miteinander verklebendem Kunststoff. Der erste Raum A weist demnach vor der Stirnwand 6 einen Eingang 8 auf, über welchen normale Luft in die inneren Hohlräume 3 der Hohlfasern 1 geleitet werden kann. Hinter der Stirnwand 7 befindet sich ein zugehöriger Ausgang 9, über den sauerstoffarme Luft abgeführt wird. Vor den Eingang 8 ist ein Luftfilter 10 geschaltet. Die ganze Anordnung kann beispielsweise in ein gestrichelt angedeutetes Kraftfahrzeug 11 in der Nähe seiner Frontseite 12 eingebaut sein, wobei sich die Hohlfasern 1 in Fahrzeuglängsrichtung erstrecken, so daß der Fahrtwind für einen ausreichenden Luftdurchsatz durch die Hohlfasern sorgt. Stattdessen oder zusätzlich kann im Ausgang ein Ventilator 13 vorgesehen sein.

Innerhalb der Faserbatterie 4 sind die Hohlfasern 1 in parallelen Reihen 14 angeordnet, zwischen denen sich Gassen 15 befinden. Diese Gassen münden in Ausgangssammelräume 16 und 17 des zweiten Raumes B, der über einen gemeinsamen Ausgang mit einer Saugpumpe 19 verbunden ist, deren Förderseite 20 zu einem Verbraucher, z.B. einer Brennkraftmaschine, führt. Die Ausgangssammelräume erstrecken sich über die gesamte Fläche der oberen Gehäusewand 21 und der unteren Gehäusewand 22, also über eine Fläche l x b. Auf diese Weise steht beispielsweise die gesamte Oberfläche jeder einzelnen Hohlfaser ohne störende Widerstände mit dem Ausgang 18 des zweiten Raumes B in Verbindung. Die Breite der Gassen kann verhältnismäßig klein sein, da auch die Fasern klein sind und die maximale Erstreckung in Höhenrichtung nur h/2, beim Ausführungsbeispiels also 100 mm, beträgt.

Bei der Ausführungsform nach den Fig. 4 und 5 sind Hohlfasern 51, die an der Außenseite mit einer Membran 52 belegt sind, mit Abschnitten 53 größeren Durchmessers versehen. Diese finden sich hier an den Enden der Hohlfasern und sind in eine Stirnwand 6 abgedichtet eingebettet. Gemäß Fig. 5 können derartige Hohlfasern im Bereich ihrer Abschnitte 53 dicht nebeneinander angeordnet werden, wodurch im übrigen Verlauf der Hohlfasern Gassen 54 verbleiben, die in diesem Fall eine Wellenform besitzen.

Solche Abschnitte 53 können auch an beliebiger Stelle der Hohlfaserlänge angeordnet sein. Sie brauchen auch nicht in einer Ebene zu liegen, da bereits durch die Abstützung eines Abschnitts 53 am normalen Durchmesser einer benachbarten Hohlfaser eine ausreichende Gasse verbleibt.

Die Herstellung solcher Hohlfasern 51 mit Abschnitten 53 größeren Durchmessers kann mit Hilfe von Maßnahmen erfolgen, die in Verbindung mit Fig. 6 beschrieben sind.
Hiernach ist ein Spritzkopf 55 vorgesehen, der eine Ringdüse zur Zufuhr des Materials 57 für die Hohlfaser 51 und
eine zentrische Düse 58, über die ein gasförmiges Füllmittel mit einem Druck p eingeleitet wird, aufweist.
Dieser Druck p wird zeitweilig erhöht, wie es durch Impulse 59 angedeutet ist. Auf diese Weise entstehen die
vergrößerten Abschnitte 53.

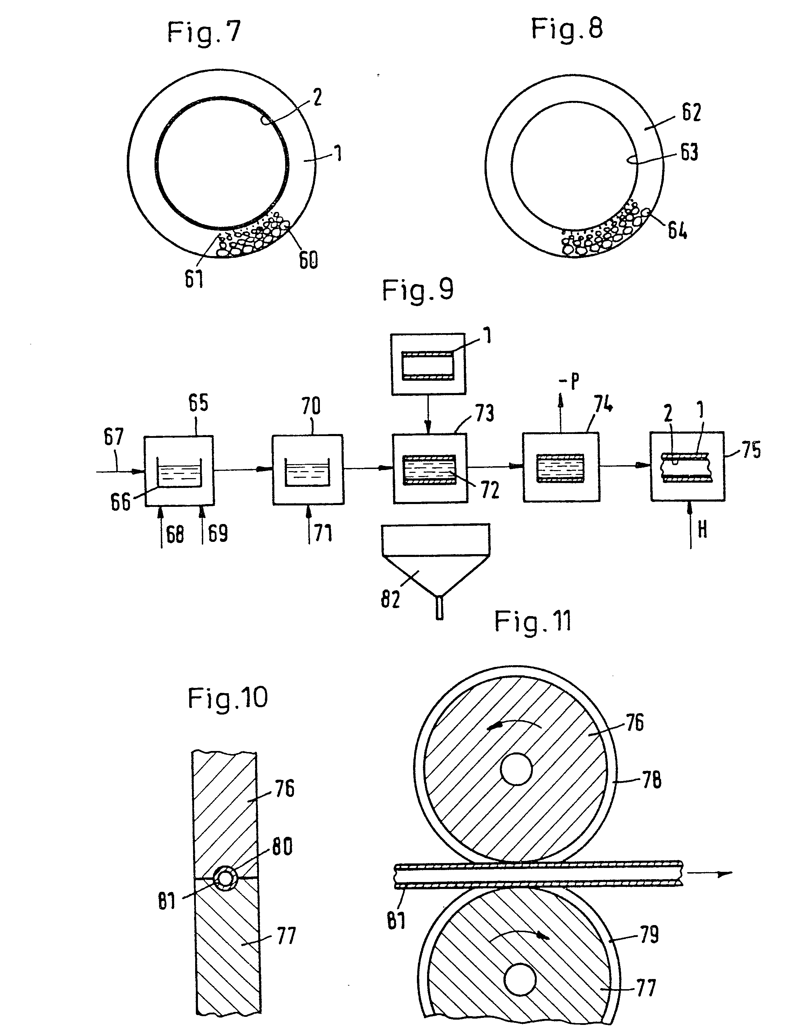

Fig. 7 zeigt eine Hohlfaser 1 mit Innenmembran 2 im Querschnitt. Es ist ersichtlich, daß die äußeren Poren 60
größer sind als die inneren Poren 61, welche unmittelbar
unterhalb der Membran 2 liegen. Während die inneren Poren
beispielsweise eine Größe von 15 nm haben, steigt die Brengröße nach außen hin bis zu etwa 1 µm an. Die Poren sind
untereinander verbunden.

In Fig. 8 ist eine andere Ausführungsform gezeigt, bei
der eine Hohlfaser 62 aus demselben Material wie die Membran 63 besteht. Auch hier werden die Poren 64 von außen
nach innen kleiner. Die innerste Porenschicht ist jedoch
geschlossen, so daß die gewünschte Membran 63 entsteht.

Der Membranwerkstoff muß hinsichtlich der Gaspermeabilität
und dem $O_2$-$N_2$-Separationsfaktor ausgewählt werden. Hierfür gibt es verschiedene Möglichkeiten. Besonders empfehlenswert ist Silikonkautschuk (Dimethylpolysiloxan)
oder Silikonkautschuk-Polycarbonat-Copolymerisat aus
Dimethylpolysiloxan und Bisphenol A mit hohem Gehalt
(über 80%) an Dimethylpolysiloxan. Silikonkautschuk hat
einen Trennfaktor zwischen Sauerstoff und Stickstoff von
2,2, so daß das Gasgemisch im Raum geringeren Drucks
einen Sauerstoffgehalt von ca. 30 - 35 Vol.% aufweist.
Es werden zweckmäßigerweise kalt vulkanisierbare Membranwerkstoffe verwendet, wobei auf Füllstoffe, bzw. Pigmente ganz oder weitgehend verzichtet werden sollte, um die Membraneigenschaften nicht zu beeinträchtigen. Es kommen aber auch heiß vulkanisierbare Materialien in Betracht.

Die Vernetzung des Membranwerkstoffes erfolgt mit Hilfe einer Vernetzerkomponente und eines Katalysators. Als Vernetzerkomponente kommen die verschiedensten bekannten Materialien in Betracht, vorzugsweise Ortho- oder Polykieselsäureester, Alkyltrialkoxysilane oder Siloxane mit Si-H-Bindungen. Derartige Vernetzerkomponenten können dem vulkanisierbaren Membranwerkstoff vor der Beschichtung beigemischt werden, sie können auch vor der Beschichtung auf die Umfangswand der Hohlfaser aufgetragen werden. Wenn der Hohlfaserwerkstoff aktive Gruppen, wie Hydroxyl- oder Alkoxy-Gruppen aufweist, kann auf eine Vernetzerkomponente auch verzichtet werden.

Als Katalysatoren kommen die verschiedensten bekannten Materialien in Betracht. Insbesondere eignen sich organische Peroxide, Amine oder carbonsauere Salze, z.B. Zinn-II-Oktoat oder Dibutyl-Zinn-dilaurat, hierfür.

Der Membranwerkstoff kann mit der Vernetzerkomponente und dem Katalysator gemischt und nach Entgasung gelöst bzw. dispergiert werden. Empfehlenswert ist eine ein- bis vierprozentige Lösung bzw. Dispersion. Als Lösungs- bzw. Dispersionsmittel kommen aromatische oder aliphatische Kohlenwasserstoffe (insbesondere Petroläther) sowie chlorierte Kohlenwasserstoffe in Frage.

Die Hohlfasern sollten aus einem Polyadditions- oder Kondensationsprodukt bestehen. Geeignet ist insbesondere Polyester, Polyamid, Polysulfon, Zellulose und Zelluloseacetat. Feinste Verstärkungseinlagen aus anderem Material sind möglich.

In Fig. 9 ist schematisch der Verfahrensablauf beim Auftragen einer Membran 2 an der Innenseite einer Hohlfaser 1 veranschaulicht. In einer ersten Stufe 65 werden in einem Behälter 66 der Membranwerkstoff 67, ein Katalysator 68 und eine Vernetzungskomponente 69 gemischt. Anschließend wird das Gemisch in einer Stufe 70 mit Lösungsmittel 71 gemischt. Nach einer gewissen Ruhezeit, in der bereits eine leichte Vernetzung stattfinden kann, wird die Lösung 72 in einer Stufe 73 in das Innere der Hohlfasern 1 gegeben. In einer Stufe 74 wird bei Raumtemperatur an der Außenseite ein Unterdruck -P erzeugt, wodurch das Lösungsmittel verdunstet und durch die Hohlfaserwand nach außen entfernt wird. Die poröse Wand wirkt hierbei als Filter, welche das Lösungsmittel passieren läßt, aber den Membranwerkstoff an der Innenseite der Hohlfaser zurückhält. In einer Stufe 75 wird in einem Heizofen Wärme H bei etwa 50° zugeführt, wodurch die Lösungsmittelreste vollständig entfernt werden und die Vernetzung beschleunigt abgeschlossen wird.

Dieses Verfahren wird dadurch vereinfacht, daß die Hohlfasern 1 bereits in der Vorrichtung montiert sind. Denn nunmehr kann die Lösung einfach durch den Eingang 8 eingegeben werden. Der Unterdruck wird durch die Saugpumpe 19 erzeugt. Es bereitet auch keine Schwierigkeiten, das Gehäuse auf eine erhöhte Temperatur zu bringen. Die so hergestellten Membranen sind mechanisch geschützt und werden auch nicht durch eine weitere Verarbeitung beeinträchtigt.

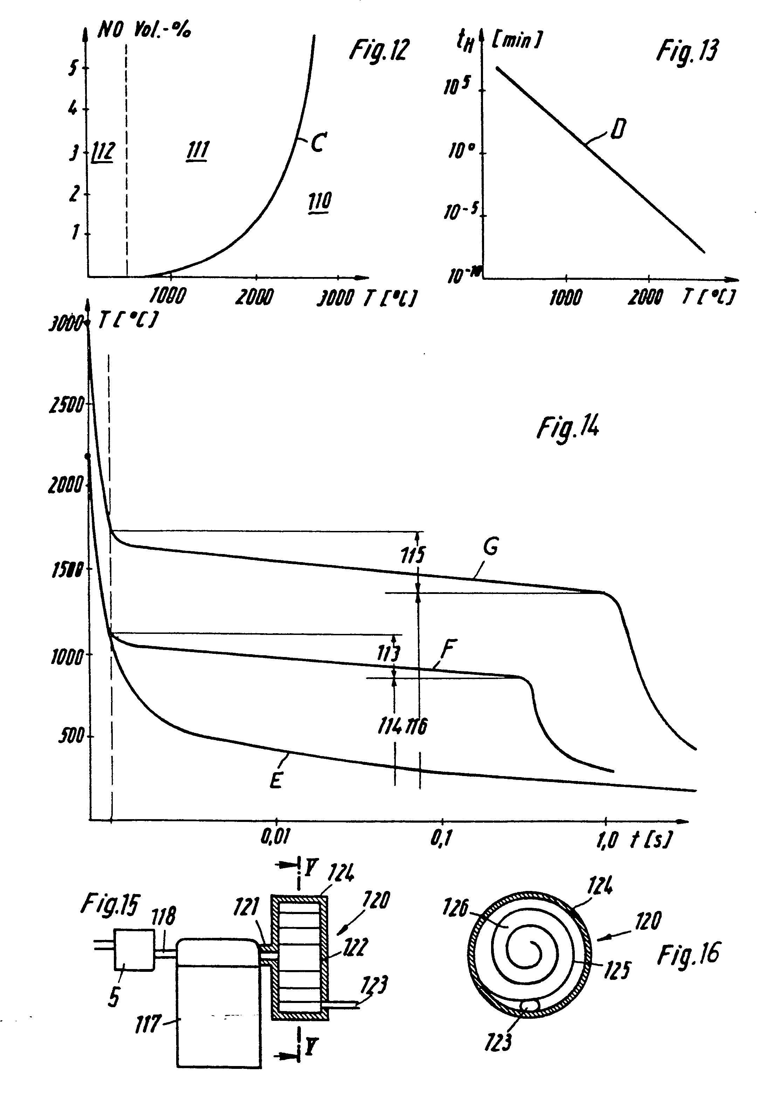

Bei der Ausführungsform nach den Figuren 10 und 11 sind zwei Walzen 76 und 77 vorgesehen, die je eine Umfangsrinne 78 bzw. 79 aufweisen. Beide Umfangsrinnen sind so bemessen, daß sie einen Durchlaß 80 ergeben, der geringfügig größer ist als der Querschnitt einer Hohlfaser 81.

Über einen Trichter 82 wird ein Gemisch aus fließfähigem Membranwerkstoff, Katalysator und Vernetzerkomponente auf die in Pfeilrichtung umlaufende Oberwalze 76 aufgetragen. Das Material gelangt auf die Außenseite der Hohlfaser 81. Der Durchlaß 80 bestimmt die Dicke der aufgetragenen Schicht. Der Rest wird abgestreift und kann unten wieder aufgefangen werden. Die Hohlfaser kann anschließend zwecks Vulkanisation durch einen Ofen geleitet und anschließend aufgewickelt werden. Statt des Trichters 82 kann auch eine Ringdüse zum Auftragen des vulkanisierbaren Membranwerkstoffes benutzt werden. Der Werkstoff kann auch aufgesprüht oder durch Tauchen aufgebracht werden. In dieser Weise läßt sich auch gelöster Membranwerkstoff auftragen.

Eine weitere Möglichkeit besteht darin, bei der Ausführungsform nach Fig. 6 dem Füllmittel den Membranwerkstoff beizufügen, bei gasförmigem Füllmittel in verstäubter Form, bei einem flüssigen Füllmittel beispielsweise in Lösung.

In dem Diagramm der Fig. 12 ist der NO-Anteil in Volumenprozenten über der Abgastemperatur T dargestellt. Die Kurve C trennt einen Bereich 110, in welchem NO gebildet wird, von einem Bereich 111, in welchem NO zerfällt. Links von der gestrichelt eingezeichneten $500^{\circ}$-Grenze befindet sich ein Bereich 112, in welchem NO metastabil ist. Hieraus ist ersichtlich, daß der NO-Anteil im Abgas mit steigender Temperatur steil ansteigt und bei $2700^{\circ}C$ rund 5 Volumenprozent ausmacht.

In Fig. 13 ist über der Abgastemperatur T mit der Kurve D die Zerfalls-Halbwertszeit $t_H$ des NO veranschaulicht. Hieraus ergibt sich, daß das NO bei $2700^{\circ}C$ praktisch sofort zerfällt, bei $2200^{\circ}C$ in 1/2000 s, bei $1700^{\circ}C$ in etwa 0,6 s, bei $1200^{\circ}C$ in mehreren Minuten und bei $700^{\circ}C$ in mehreren Wochen.

In Fig. 14 ist die Abgastemperatur über der Zeit t veranschaulicht, wobei die gestrichelte Linie den Austritt des Abgases aus der Brennkraftmaschine ohne Rücksicht auf den Meßstab kennzeichnet. In dem Bereich unter 700$^o$C ist praktisch kein NO-Zerfall mehr zu erwarten. Die Kurve E zeigt den bekannten Fall, in dem eine Verbrennung bei rund 2000$^o$ bis 2200$^o$C erfolgte und das Abgas mit etwa 1000$^o$C aus der Brennkraftmaschine austritt. Es erfolgt im Auspuffkrümmer eine weitere schlagartige Abkühlung, so daß das Abgas einen erheblichen Anteil des NO enthält, das bei einer höheren Temperatur vorhanden war.

Die Kurve F zeigt für die gleichen Verhältnisse in der Brennkraftmaschine einen Abkühlverlauf gemäß der Erfindung. Während eines ersten Temperaturbereichs 113, der hier von etwas über 1000$^o$C bis etwas darunter reicht, ist die Abkühlung verlangsamt. Erst im anschließenden Temperaturbereich 114 erfolgt eine plötzliche Abkühlung. Dieser Temperaturbereich 113 wird in einer Zeit von etwa 0,5 s durchlaufen. Da im ersten Temperaturbereich 113 Stickoxide in erheblichem Maße abgebaut werden, daher der Stickoxid-Anteil vor der raschen Abkühlung kleiner als im Falle der Kurve E ist, hat man auch nach der Abkühlung einen kleineren Stickoxid-Anteil im Abgas.

Entsprechendes gilt für die Kurve G , die den Fall kennzeichnet, daß die Verbrennung infolge eines erhöhten Sauerstoffanteils in der Verbrennungsluft bei etwa 3000$^o$C erfolgt und die Austrittstemperatur des Abgases rund 1700$^o$C beträgt. Hier wird die Abkühlung in einem Temperaturbereich 115, der bis 1300$^o$C reicht, langsam durchgeführt, wofür eine Zeit von etwa einer Sekunde vorgesehen ist. In dem darauffolgenden Temperaturbereich 116 erfolgt eine rasche Abkühlung. Auf diese Weise läßt sich der Stickoxidanteil des Abgases trotz der hohen Ausgangswerte beim Austritt aus der Brennkraftmaschine bis auf vertretbar kleine Werte vermindern. In der Praxis können die Verweilzeiten auch kürzer oder länger gewählt werden.

Bei der Ausführungsform nach Fig. 15 wird einer Brennkraftmaschine 117 über eine Leitung 118 Verbrennungsluft zugeführt, deren Sauerstoffanteil in einer Vorrichtung 5 erhöht worden ist. Das Abgas wird über einen Kanal 120 abgeführt, der aus einem ersten Rohrabschnitt 121, einem Behälter 122 und einem zum Schalldämpfer führenden Rohrabschnitt 123 besteht. Der Rohrabschnitt 121 und der Behälter 122 sind mit einer Wärmeisolation 124 umgeben. Im Behälter ist eine spiralförmige Wand 125 vorgesehen. Das in der Mitte zugeführte Abgas durchläuft daher einen spiralförmigen Kanal 126 von innen nach außen. Infolge der verzögerten Wärmeabgabe und verhältnismäßig langen Zeit, in der das Abgas diesen Bedingungen ausgesetzt ist, ergibt sich die gewünschte langsame Abkühlung über den ersten Temperaturbereich.

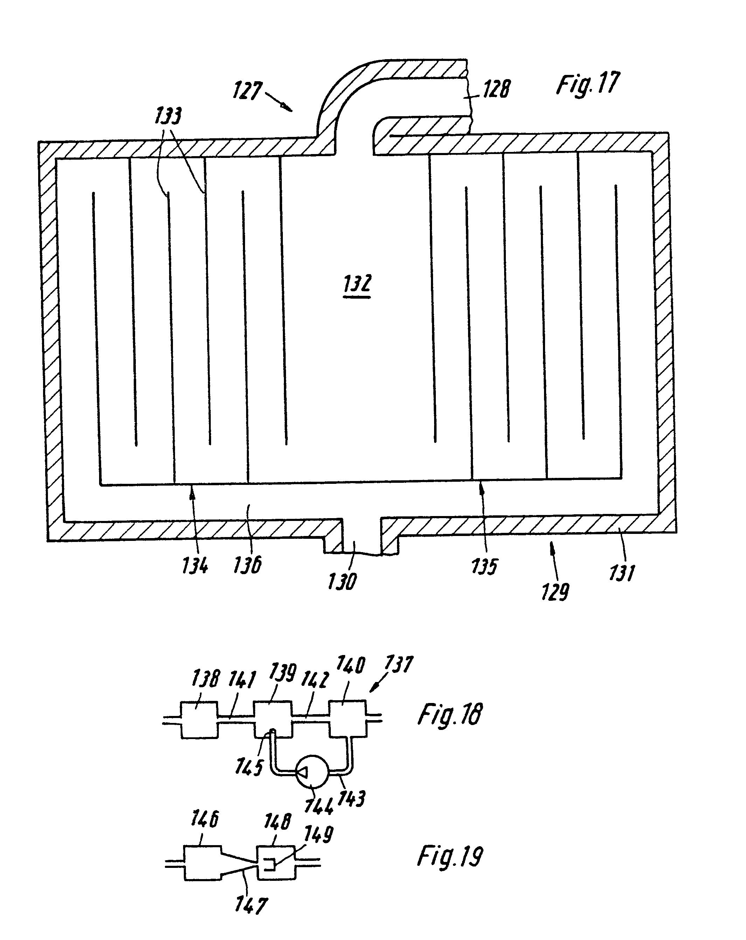

Bei der Ausführungsform nach Fig. 17 weist ein Abgaskanal 127 einen ersten Rohrabschnitt 128, einen Behälter 129 und einen zweiten Rohrabschnitt 130 auf, die sämtlich von einer Wärmeisolation 131 umgeben sind. Im Behälter sind zu beiden Seiten eines Mittelraumes 132 abwechselnd von beiden Seiten her verlaufende Wände 133 vorgesehen, so daß sich zwei labyrinthartig verlaufende Abgaskanalabschnitte 134 und 135 ergeben. Bei einem ausreichend langen Strömungsweg im Behälter 129 kann gegebenenfalls auch an der Unterseite und den Seitenwänden auf die außen aufgebrachte Wärmeisolierung verzichtet werden, weil das durch den letzten Kanalabschnitt 136 im Behälter 129 strömende Abgas als Wärmeisolation für die vorangehenden Abschnitte wirkt.

Bei der Ausführungsform nach Fig. 18 ist eine Vorrichtung 137 vorgesehen, die drei hintereinandergeschaltete Behälter 138, 139 und 140 aufweist, welche je durch Drosselabschnitte 141 und 142 verbunden sind. Auf diese Weise ergibt sich eine Schalldämpferfunktion. Die zugehörige Wärmeisolation ist nicht veranschaulicht. Aus dem Behälter 140 wird über eine Rückführleitung 143 mit einem Verdichter 144 mittels einer Einspritzvorrichtung 145 Abgas in den Behälter 139 eingespritzt. Durch die Kompression im Verdichter 144 nimmt das zurückgeleitete Abgas Wärmeenergie auf. Der Druck kann so gewählt sein, daß dieses Abgas mit sehr großer Geschwindigkeit, insbesondere Überschallgeschwindigkeit, in den Behälter 139 geleitet wird. Durch den Zusammenprall von Molekülen wird kinetische Energie in Wärmeenergie umgesetzt, so daß das Abgas im Behälter 139 länger auf einem vorgegebenen Temperaturniveau gehalten wird.

Bei der Ausführungsform nach Fig. 19 ist ein erster Behälter 146 über eine starke Kanalverengung 147 mit einem zweiten Behälter 148 verbunden. Das in der Verengung 147 beschleunigte Abgas trifft auf eine Prallplatte 149, wodurch wiederum kinetische in Wärmeenergie umgewandelt wird, also das Abgas im Behälter 148 länger auf einem bestimmten Temperaturniveau gehalten wird.

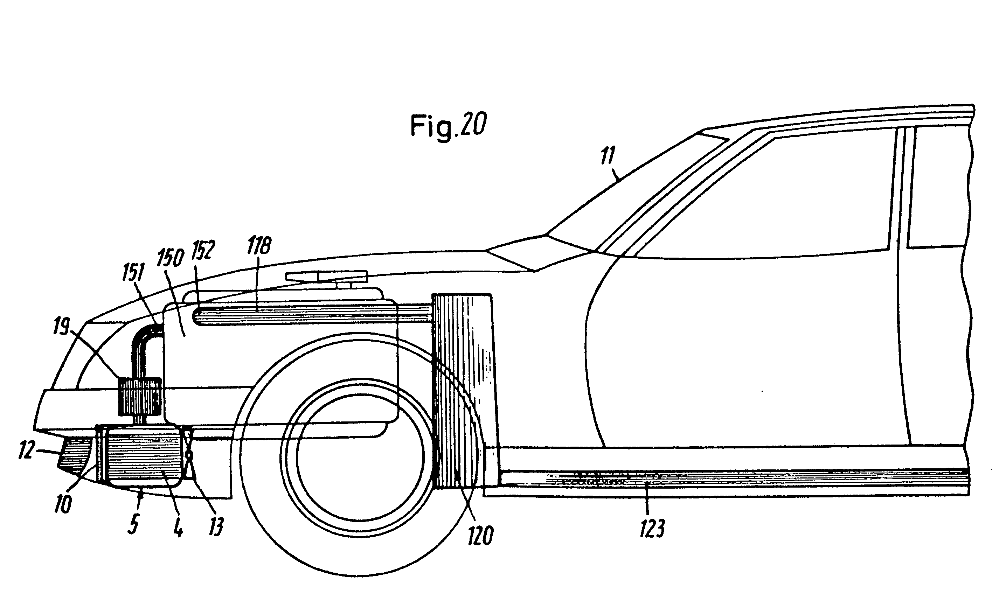

Fig. 20 zeigt schematisch die Anordnung eines Gehäuses 5 (Fig. 2 und 3) und eines Behälters 120 (Fig. 15) in Verbindung mit dem Brennkraftmotor 150 eines Kraftfahrzeugs 11. Über die Leitung 151 wird $O_2$-angereicherte Luft dem üblichen Vergaser zugeführt; bei 152 treten die Abgase nach der Verbrennung aus dem Motor aus.

In ähnlicher Weise kann auch eine Feuerung mit entsprechend hohem Wirkungsgrad betrieben werden.

- 21 -

## Patentansprüche

1. Vorrichtung zur Erhöhung oder Verminderung des Sauerstoffanteils der einem Verbraucher, insbesondere einem Brennraum, zuzuführenden Luft unter Verwendung einer sehr dünnen semipermeablen Membran, die einen ersten Raum höheren Druckes mit einem Eingang für normale Luft und einen Ausgang für $O_2$-verarmte Luft und einen zweiten Raum geringeren Druckes mit einem Ausgang für $O_2$-angereicherte Luft trennt, dadurch gekennzeichnet, daß Hohlfasern (1, 51, 62) mit mikroporöser Wand die Membran (2, 52, 63) auf einer Umfangsfläche aufweisen und in großer Zahl parallel zueinander in einem Gehäuse (5) angeordnet sind, dessen einander gegenüberliegende Stirnwände (6, 7) von den Enden der Hohlfasern durchsetzt sind, wobei diese Enden an ihrem Außenumfang abgedichtet sind.

2. Vorrichtung nach Anspruch 1, dadurch gekennzeichnet, daß die Hohlfasern (1, 51) einen Träger bilden, auf den die Membran (2, 52) aufgebracht ist.

3. Vorrichtung nach Anspruch 1 oder 2, dadurch gekennzeichnet, daß die Hohlfasern (62) aus dem Membranmaterial bestehen.

4. Vorrichtung nach einem der Ansprüche 1 bis 3, dadurch gekennzeichnet, daß die Hohlfasern in ihrer Wand Verstärkungseinlagen aufweisen.

5. Vorrichtung nach einem der Ansprüche 1 bis 4, dadurch gekennzeichnet, daß die inneren Hohlräume (3) der Hohlfasern (1, 51) den ersten Raum (A) und der Gehäuseraum außerhalb der Hohlfasern den zweiten Raum (B) bilden.

6. Vorrichtung nach einem der Ansprüche 1 bis 5, dadurch gekennzeichnet, daß mindestens 100 000 Hohlfasern, vorzugsweise mehr als 0,5 Millionen Hohlfasern, vorgesehen sind.

7. Vorrichtung nach einem der Ansprüche 1 bis 6, dadurch gekennzeichnet, daß soviel Hohlfasern (1) annähernd parallel zueinander in einer Hohlfaserbatterie (4) angeordnet sind, daß sich eine Membranfläche von 15 bis 500 $m^2$ ergibt.

8. Vorrichtung nach einem der Ansprüche 1 bis 7, dadurch gekennzeichnet, daß die Hohlfasern (1) in einem Gehäuse (5) angeordnet sind und sich mindestens ein Ausgangssammelraum (16, 17) längs einer parallel zu den Hohlfasern verlaufenden Gehäuseseitenwand (21, 22) erstreckt.

9. Vorrichtung nach Anspruch 8, dadurch gekennzeichnet, daß das Gehäuse (5) rechteckige Stirnwände (6, 7) mit einer langen und einer demgegenüber kurzen Seite besitzt und daß sich der Ausgangssammelraum (16) längs einer zwischen den langen Seiten der Stirnwände verlaufenden Gehäuseseitenwand (21) und im wesentlichen über deren gesamte Fläche erstreckt.

10. Vorrichtung nach Anspruch 9, dadurch gekennzeichnet, daß ein zweiter gleichartiger Ausgangssammelraum (17) sich längs der gegenüberliegenden Gehäuseseitenwand (22) erstreckt.

11. Vorrichtung nach einem der Ansprüche 1 bis 10, dadurch gekennzeichnet, daß die Hohlfasern einen Außendurchmesser von 100 bis 400 μm, vorzugsweise um 200 μm, haben.

12. Vorrichtung nach einem der Ansprüche 1 bis 11, dadurch gekennzeichnet, daß die Hohlfasern eine Wandstärke von höchstens 20 μm, vorzugsweise weniger als 6 μm haben.

13. Vorrichtung nach einem der Ansprüche 1 bis 12, dadurch gekennzeichnet, daß die Hohlfasern eine Länge von weniger als 200 mm, vorzugsweise von etwa 100 mm, haben.

14. Vorrichtung nach einem der Ansprüche 1 bis 13, dadurch gekennzeichnet, daß die Porengröße der Hohlfasern zur Membran hin abnimmt.

15. Vorrichtung nach Anspruch 14, dadurch gekennzeichnet, daß die Größe der von der Membran abgedeckten Poren 20 bis 50 nm beträgt.

16. Vorrichtung nach einem der Ansprüche 1 bis 15, dadurch gekennzeichnet, daß die Membran (2, 63) am Innenumfang der Hohlfasern (1, 62) angeordnet ist.

17. Vorrichtung nach einem der Ansprüche 1 bis 16, dadurch gekennzeichnet, daß dem Eingang (8) des ersten Raumes (A) ein Luftfilter (10) vorgeschaltet ist.

18. Vorrichtung nach einem der Ansprüche 1 bis 17, dadurch gekennzeichnet, daß beim Einbau in ein Kraftfahrzeug (11) die Hohlfasern (1) sich in dessen Längsrichtung erstrecken und die einen Enden nahe der Frontseite
(12) des Fahrzeugs angeordnet sind.

19. Vorrichtung nach einem der Ansprüche 1 bis 18, gekennzeichnet durch ein Gebläse (13) zum Antrieb der
Luft durch den inneren Hohlraum (3) der Hohlfasern
(1).

20. Vorrichtung nach einem der Ansprüche 1 bis 19, dadurch
gekennzeichnet, daß der Brennraum Teil einer Brennkraftmaschine (117, 150) oder Feuerungsanlage ist und
daß die Membranfläche so groß gewählt ist, daß die
Verbrennungstemperatur über 2500°C liegt.

21. Vorrichtung nach Anspruch 20, dadurch gekennzeichnet,
daß dem Abgaskanal des Brennraums eine Vorrichtung
(122, 129, 145, 147-149) zur Verminderung des Stickoxidanteils zugeordnet ist.

22. Vorrichtung nach Anspruch 21, dadurch gekennzeichnet,
daß der Abgaskanal in seinem ersten Teil eine Wärmeisolation (124, 131) aufweist, die eine den Stickoxidzerfall begünstigende Verzögerung der Abgasabkühlung bewirkt.

23. Vorrichtung nach Anspruch 21 oder 22, dadurch gekennzeichnet, daß dem Abgaskanal mindestens eine Vorrichtung (145, 147-149) zur reaktionsfreien Abgaserwärmung zugeordnet ist.

24. Verfahren zur Herstellung der Vorrichtung nach einem
der Ansprüche 1 bis 23, dadurch gekennzeichnet, daß
die Hohlfasern zunächst hergestellt und dann mit einer
Beschichtungsflüssigkeit, die Membranwerkstoff enthält, behandelt werden, worauf der Membranwerkstoff auf den Hohlfasern vernetzt wird.

25. Verfahren nach Anspruch 24, dadurch gekennzeichnet, daß die Beschichtungsflüssigkeit ein Lösungs- oder Dispersionsmittel für den Membranwerkstoff enthält, das anschließend entfernt wird.

26. Verfahren nach Anspruch 24 oder 25, dadurch gekennzeichnet, daß die Hohlfasern mit der Beschichtungsflüssigkeit besprüht werden.

27. Verfahren nach einem der Ansprüche 24 bis 26, dadurch gekennzeichnet, daß die Beschichtungsflüssigkeit in das Innere der Hohlfasern geleitet wird.

28. Verfahren nach einem der Ansprüche 24 bis 27, dadurch gekennzeichnet, daß bei der Herstellung der Hohlfasern zur Erzeugung des inneren Hohlraums ein Füllmittel in dem Fasermaterial eingeführt wird, das Membranwerkstoff enthält.

29. Verfahren zum Betrieb der Vorrichtung nach einem der Ansprüche 20 bis 23, dadurch gekennzeichnet, daß durch Anreicherung der Verbrennungsluft mit Sauerstoff im Brennraum eine Verbrennungstemperatur von mehr als 2500$^{\circ}$C erzielt wird und daß die Abkühlung der den Brennraum verlassenden Abgase über einen Temperaturbereich von mindestens 200$^{\circ}$C langsamer erfolgt als über einen nachfolgenden Temperaturbereich.

30. Verfahren nach Anspruch 29, dadurch gekennzeichnet, daß die Abkühlgeschwindigkeit im Temperaturbereich langsamer Abkühlung der temperaturabhängigen Zerfallgeschwindigkeit des Stickoxids angenähert ist.

1/5

Fig.1

Fig.2

Fig.3

Fig.4

Fig.5

Fig.6

Fig.7

Fig.8

Fig.9

Fig.10

Fig.11

Fig. 12

Fig. 13

Fig. 14

Fig. 15

Fig. 16

127    133    128    *Fig.17*

132

134    136    130    135    129    131

138  141    139  142    140    137

145    *Fig.18*

144  143

146    148    149    *Fig.19*

147

Fig.20